# EUROPÄISCHE PATENTSCHRIFT

(11) **EP 3 266 561 B1**
(45) Veröffentlichungstag und Bekanntmachung des Hinweises auf die Patenterteilung: **26.06.2019**
(21) Anmeldenummer: 17184608.2
(22) Anmeldetag: 09.07.2015
(51) Int. Cl.: B23K 37/02, B23K 37/04, B23K 37/047, B23K 26/08, B23K 26/26, B23Q 7/02, B23K 26/361, B23K 101/18, B23K 26/02

(54) **LASER-ABLATIONS- UND SCHWEISSANLAGE**
LASER ABLATION AND WELDING SYSTEM
INSTALLATION DE SOUDURE ET D'ABLATION LASER

(30) Priorität: 08.09.2014 DE 102014112888
(43) Veröffentlichungstag der Anmeldung: 10.01.2018
(62) Teilanmeldung aus: 15734412.8
(73) Patentinhaber: Baosteel Lasertechnik GmbH, 88212 Ravensburg (DE)
(72) Erfinder: ALBER, Gerhard, 88276 Berg (DE)
(74) Vertreter: Otten, Roth, Dobler & Partner mbB Patentanwälte

(56) Entgegenhaltungen:
- EP-A1- 1 529 593
- JP-A- H10 166 159
- US-A1- 2011 240 612

## Beschreibung

Die Erfindung betrifft eine automatische Laser-Ablations- und Schweißanlage gemäß dem Oberbegriff des Anspruchs 1 (siehe z.B. US 2011/240612 A1).

Im Stand der Technik der DE 10 2010 060 958 A1 sind Anlagen bekannt, bei welchen Werkstücke im Arbeitsbereich eines Lasers positioniert, ausgerichtet und sodann bearbeitet werden. Üblicher Weise werden derartige, im Bezug auf die Ausrichtung der Werkstücke hoch sensible Vorgänge immer in einer spezialisierten Arbeitsstation in der Reihenfolge ausgeführt, dass jeder Bearbeitungsschritt ein Einlegen und Ausrichten des Werkstücks in einer Spannvorrichtung umfasst.

Nachteilig dabei ist, dass die Entnahme aus einer Bearbeitungsstation, das Einlegen und Positionieren in eine neue Bearbeitungsstation und sodann das Spannen zur Bearbeitung einen erheblichen Handhabungsaufwand mit sich bringt, was die Effizienz einer Bearbeitungsstation erheblich mindert.

Aufgabe der Erfindung ist es daher, die Bearbeitung von Werkstücken in Laser-Bearbeitungsstationen in ihrer Effizienz zu verbessern.

Diese Aufgabe wird durch eine Anlage nach Anspruch 1 für den Vorgang des Laser-Ablatierens mindestens zweier Werkstücke mit anschließendem Laser-Verschweißen mindestens zweier Werkstücke gelöst.

Vorteilhafte Weiterbildungen sind in den abhängigen Ansprüchen angegeben.

Es ist eine automatische Laser-Ablations- und Schweißanlage zum Fügen von mindestens zwei Werkstücken, insbesondere zwei Blechen, offenbart, wobei die Ablations- und Schweißanlage mindestens eine Spanneinheit, eine erste Positionierstation, eine Ablationsstation, eine zweite Positionierstation und eine Schweißstation umfasst. Die mindestens zwei Werkstücke in einer einzigen Spanneinheit ablatiert, gefügt und verschweißt werden.

Erfindungsgemäß ist vorgesehen, dass die zwei in Ablationsposition ausgerichteten Werkstücke an ihren Fügekanten mittels eines ersten Laserkopfs von ihrer Oberseite sowie eines zweiten Laserkopfs von ihrer Unterseite bearbeitbar sind und die Laserköpfe dabei entlang einer Bahn einander nachfolgend die Kontur der Fügekanten ablaufen, sodass der Ablationsschritt erfolgt, ohne dass die Laserköpfe zu einem Bearbeitungszeitpunkt einander gegenüberstehen.

Die Erfindung bietet den Vorteil, dass ein Handhaben und Umspannen von einem Bearbeitungsschritt vermieden wird, wodurch die Bearbeitungszeit verkürzt und damit die Effizienz erhöht wird.

In einer bevorzugten Ausführung der Ablations- und Schweißanlage ist vorgesehen, dass ein Drehtisch mit einer Mehrzahl von Spanneinheiten umfasst ist, wobei die Spanneinheiten über den Drehtisch von Position zu Position bewegbar sind.

Die Anordnung der Spanneinheiten auf einem Drehtisch erlaubt, dass jeder Takt des Verfahrens nacheinander umlaufend durchgeführt wird, und die Spanneinheiten mit gespannten Werkstücken in Form einer Bearbeitungsstraße bzw.

Bearbeitungslinie nacheinander verschiedene Bearbeitungsstationen durchlaufen.

Besonders vorteilhaft ist es dabei, wenn die Spanneinheit mindestens einen Spannmagneten pro Werkstück umfasst. Über Spannmagneten lassen sich die Werkstücke in Form von Blechen oder dergleichen präzise fixieren, positionieren und lösen, ohne dass mechanische Klemmvorrichtungen an die Werkstückkontur angepasst werden müssen.

Eine erweiterte Ausführung sieht vor, dass mindestens ein Spannmagnet pro Werkstück in der Spanneinheit schwimmend angeordnet bewegbar ist und über Fixiermittel, insbesondere Klemmvorrichtungen in einer angeschwommenen Position fixierbar ist.

Auf diese Weise lassen sich das Spannen und das oben beschriebene Anschwimmen an die Positioniermittel leichter realisieren weil lediglich die schwimmende Bewegung des Magnetkopfes in einer Ebene, insbesondere durch inkrementelle Bewegung zweier paralleler, jedoch nicht synchroner voneinander beabstandeter Vorschubachsen für den Spannmagneten ausgeführt werden muss.

Es ist ergänzend auszuführen, dass sowohl das erste als auch das zweite Spannmittel als Spannmagneten ausgeführt sein kann. In der Praxis hat sich herausgestellt, dass das erste Spannmittel als Spannmagnet und das zweite Spannmittel als kraftschlüssige Spann-Klemmvorrichtung auszubilden, die bevorzugte wirtschaftliche und effizienteste Lösung darstellt.

Wesentlich ist, dass die Werkstücke nie aus dem Spannmittel entnommen werden müssen, selbst wenn eine Mehrzahl von Bearbeitungsschritten erfolgt, so dass Aufwand zu Handhabung der Werkstücke nahezu gänzlich entfällt.

Nach dem ersten Einlegen von mindestens zwei Werkstücken in eine Spanneinheit verbleiben die Werkstücke in der Spanneinheit bis zur Entnahme nach der Bearbeitung. Im Bearbeitungszyklus erfolgt lediglich eine kontrollierte und definierte Umpositionierung und Ausrichtung der gespannten Werkstücke, ohne dass eine Entnahme erforderlich ist.

Die Bearbeitungsschritte der Ablation und des Schweißens mittels Laser sind dem Fachmann hinreichend bekannt. Der Vollständigkeit halber wird ausgeführt, dass als Laserablation, auch Laserverdampfen genannt, das Abtragen von Material von einer Oberfläche durch Beschuss mit vorzugsweise gepulster Laserstrahlung bezeichnet wird. Die hierbei Verwendung findende Laserstrahlung mit hoher Leistungsdichte führt zur rapiden Erhitzung an der Oberfläche, wodurch Material entfernt wird. Das Schweißen mittels Laser ist ein Schweißverfahren, bei welchem die benötigte Energie zur Verbindung der Werkstücke mittels eines Lasers bereitgestellt wird.

Im Folgenden soll die Erfindung anhand schematischer Ausführungsbeispiele erläutert werden. Die Erfindung ist jedoch nicht auf die dargestellte Ausführungsform beschränkt.

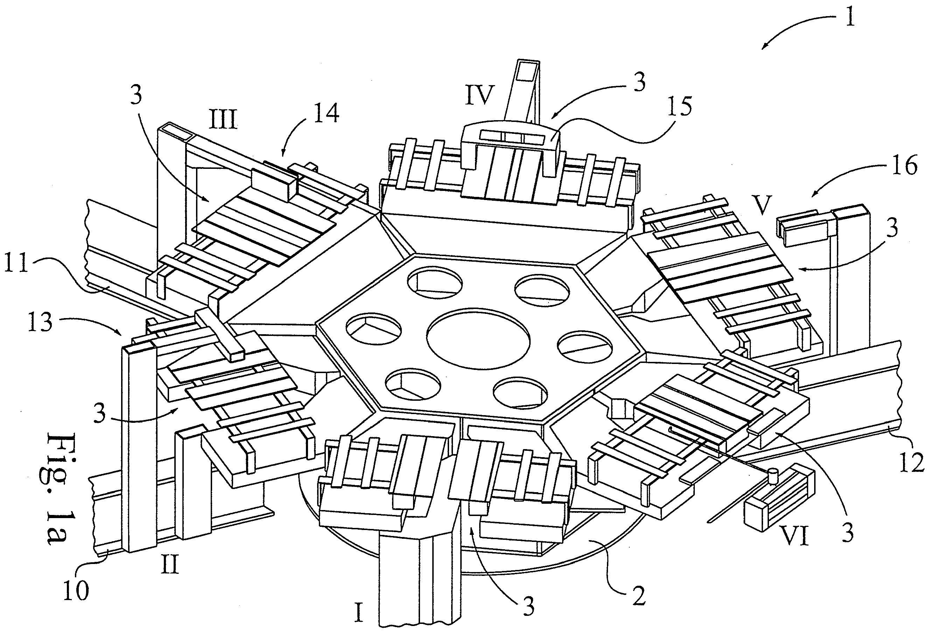

Es zeigen:
- Figur 1a:: eine Ablations- und Schweißanlage in Draufsicht;
- Figur 1b:: ein Flussdiagramm eines Ablations- und Schweißverfahrens;
- Figur 2a:: eine schematische Darstellung einer Spanneinheit;
- Figur 2b:: eine schematische Darstellung einer Spanneinheit mit Werkstück;
- Figur 3a:: eine schematische Darstellung der Bewegung der Laserköpfe im Ablationsschritt;
- Figur 3b:: eine schematische Darstellung in Längsrichtung der Laserköpfe im Ablationsschritt;
- Figur 4:: Ablauf der Ausrichtung von einer Ablationsposition in eine Fügeposition.
Im Einzelnen zeigt Figur 1a eine erfindungsgemäße Laser-Ablations- und Schweißanlage 1 in perspektivischer Draufsicht. Die Laser-Ablations- und Schweißanlage 1 umfasst einen Drehtisch 2 mit insgesamt sechs angeordneten Spanneinheiten 3 an sechs verschiedenen Bearbeitungspositionen I bis VI. Die Bearbeitungspositionen I bis VI sind umlaufend um die Drehachse 4 angeordnet und können im Bearbeitungstakt über eine Drehung um 60° ineinander übergeführt werden.

An der Bearbeitungsstation II, III sowie V sind Lineartraversen 10, 11 und 12 angeordnet. Auf der Lineartraverse 10 ist eine Laser-Ablationsvorrichtung 13 angeordnet, welche durch Verschiebung auf der Lineartraverse 10 in einen Bereich oberhalb und unterhalb der Spanneinheit 3 in der Position II bewegt werden kann, um den Bearbeitungsschritt der Laser-Ablation durchzuführen.

Die Lineartraverse 11 trägt einen Bearbeitungskopf für den optionalen Vorgang des Reinigens durch Bürsten oder Polieren, wobei auch dieser Vorgang durch Einfahren des Bearbeitungskopfs 14 in den Bereich der Spanneinheit 3 in der Bearbeitungsstation III erfolgt.

In der Station IV ist ein Klemmhalter 15 angeordnet, welcher zur Umpositionierung der ersten Spannmittel die Werkstücke in der Bearbeitungsstation auf der Spanneinheit 3 an Position IV fixiert, um die Ausrichtung der Fügekanten für den nachfolgenden Schweißvorgang in Position V zur Verfügung zu stellen.

An Position V ist die Lineartraverse 12 vorgesehen, welche in entsprechender Weise den Laserschweißkopf 16 linear in den Bearbeitungsbereich der Spanneinheit 3 an der Position V hinein- und herausbewegbar ausgestaltet.

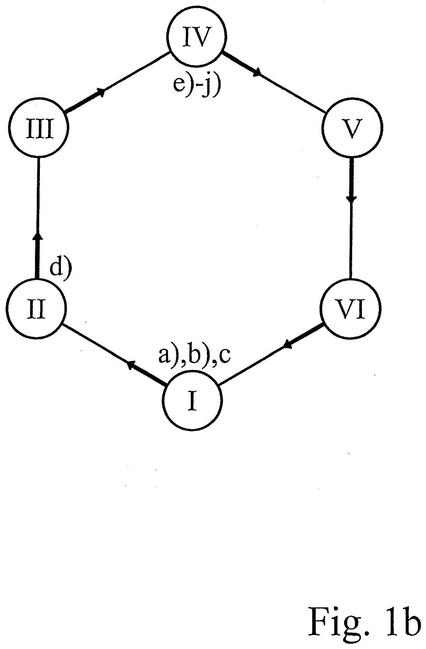

Figur 1b zeigt schematisch den Ablauf des Bearbeitungsverfahrens entsprechend einer Anordnung auf einem Drehtisch 2 nach Figur 1a. Die Verfahrensschritte a sowie b und c finden in der Position I statt. Sodann wird die Spanneinheit 3 in die Position II zur Bearbeitung in der Ablationsstation 13 durch Drehen des Drehtischs 2 weitergereicht. Dort wird der Verfahrensschritt d ausgeführt. Der optionale Verfahrensschritt der Reinigung wird in Position III vorgenommen, wobei, wie oben beschrieben, ein Bürstenkopf 14 die Fügekanten nach erfolgter Ablation reinigt, insbesondere poliert. Die Anwendung des Bürstenkopfes oder der Poliereinheit kann entweder von oben, von unten oder beidseitig erfolgen.

In Position IV erfolgt ein Umspannen und Ausrichten (Fügen) der behandelten Fügekanten der miteinander zu verschweißenden Werkstücke, wobei die Verfahrensschritte e bis j ausgeführt werden.

Durch weitere Drehung um 60° des Drehtisches 2 wird die Spanneinheit 3 von der Position IV in die Position V überführt, wo sodann das Schweißen der in Fügeposition ausgerichteten Werkstücke mittels des Laserschweißkopfs 16 erfolgt.

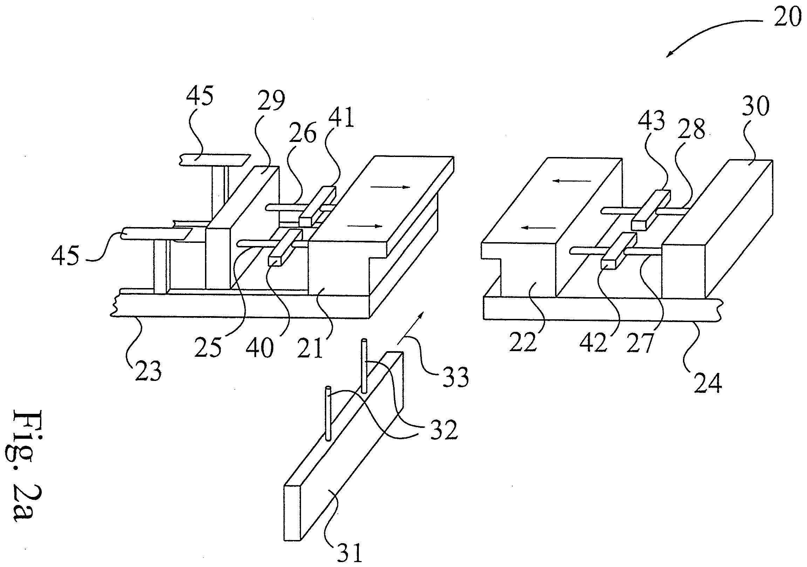

Nach Abschluss des Bearbeitungsverfahrens und weiterer Rotation des Drehtisches 2 mit der Spanneinheit 3 aus der Schweißstation V in die Entnahmeposition VI wird die fertig bearbeitete Platine, bestehend aus zwei miteinander verschweißten Werkstücken zur Entladung bereitgestellt. Figur 2a zeigt eine schematische Darstellung einer Spanneinheit 20, welche Spannmittel 21, 22 in Form von Spannmagneten aufweist. Die Spannmittel 21, 22 sind verschiebbar auf einem Rahmen 23, 24 angeordnet und können über jeweils zwei parallele, voneinander beabstandete Gewindespindeln (25,26 und 27,28) schwimmend aufeinander zu- bzw. voneinander wegbewegt werden. Die Gewindespindeln (25 bis 28) werden dabei durch Antriebseinheiten 29, 30 derart angetrieben, dass auf den Spannmitteln 21, 22 gehaltene Werkstücke (nicht dargestellt) aufeinander zubewegt werden können. Zur exakten Positionierung in einer ersten Ablationsposition wird ein Anschlag 31 mit Positionierpins 32 in Richtung 33 zwischen die Spannmittel 21 und 22 mit darauf angeordneten Werkstücken eingebracht, sodass die Fügekanten der Werkstücke schwimmend an die Positionierpins 32 durch Bewegung der Spannmittel 21, 22 über die Gewindespindeln 25 bis 28 angenähert und angeschlagen werden können. Sobald die erste Ablationsposition erreicht ist, werden über Sperrvorrichtungen 40 bis 43 die Positionen der Spannmittel 21, 22 arretiert, sodass bei einer weiteren Bearbeitung der Werkstücke auf der Spanneinheit 20 in einer anderen Bearbeitungsstation (I bis VI) die Positionierung erhalten bleibt, da die Spanneinheit bis zum Abschluss der Bearbeitung mit den Werkstücken in Verbindung bleibt. Alternativ oder ergänzend zu Sperrvorrichtungen besteht auch die Möglichkeit, die Spannmittel über die Antriebseinheiten 29,30 zu fixieren.

Um auch große Werkstücke einfach und präzise aufnehmen und handhaben zu können, weist die Spanneinheit 20 Auflagemittel 45 auf, welche vorliegend nur exemplarisch dargestellt sind.

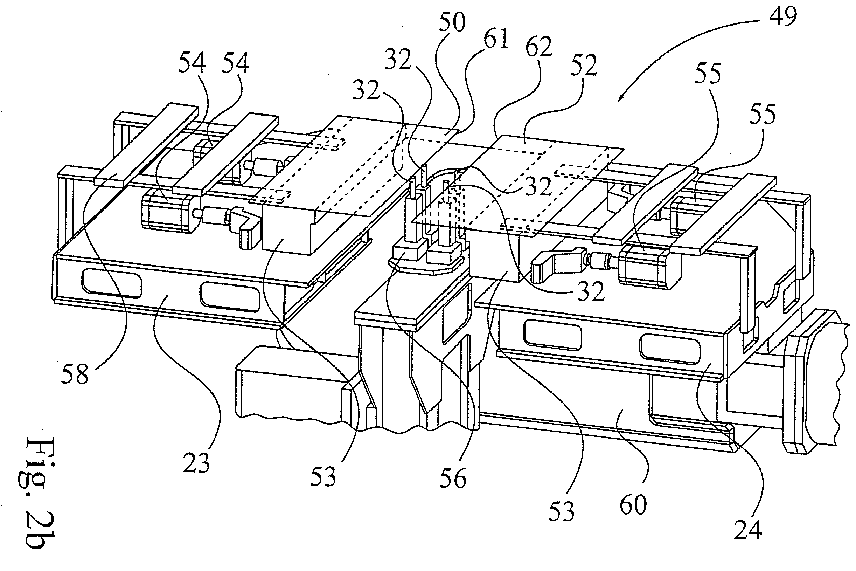

Figur 2b zeigt eine Ausführungsform der Spanneinheit 49 mit angeordneten Werkstücken 50, 51. Die Spannmagnete 52, 53 halten die Werkstücke und werden schwimmend über die Antriebe 54, 55 entsprechend der oben beschriebenen Ausführung an die Anschlagpins 56 angefahren und positioniert. Die Werkstücke 50, 51 sind vorliegend verkürzt dargestellt, sodass die Auflagen 58 sichtbar sind. Die gesamte Spanneinheit 49 ist auf einem Drehtisch 60 gelagert. Ein nicht dargestellter Vorpositionierungsschritt ermöglicht das Einlegen der Werkstücke 50, 51 mittels eines einzigen Roboter-Handhabungsgeräts, beispielsweise einen Sauger-Greifer an einem Mehrachsroboter, sodass bereits in der Vorpositionierung eine verhältnismäßig präzise Ausrichtung der Fügekanten 61, 62 der Werkstücke 50, 51 erfolgt.

Der Vollständigkeit halber ist auszuführen, dass anstatt der Gewindespindeln 25 bis 28 auch andere Vorrichtungen, beispielsweise Linearversteller, Pneumatik- oder Hydraulikversteller oder sonstige Aktuatoren in Frage kommen, die durch entsprechende Anordnung und Fixierung ein Anschwimmen im Sinne der Erfindung ermöglichen. Insbesondere die Verwendung von Pneumatikzylindern kann den zusätzlichen Vorteil bieten, dass über den pneumatischen Steuerdruck eine definierte Kraft beim Anschwimmen ausgeübt werden kann, um die Position möglichst exakt einzustellen, bevor diese mittels Sperrvorrichtungen arretiert wird.

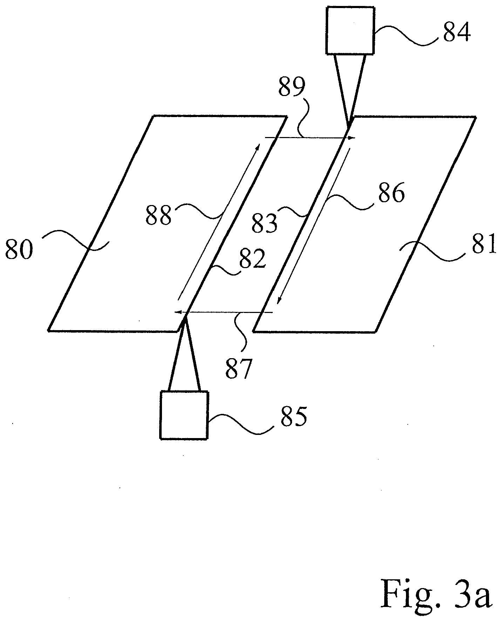

Figur 3a zeigt eine schematische Darstellung der Bewegung der Laserköpfe im Ablationsschritt. Die zwei in Ablationsposition ausgerichteten Werkstücke 80, 81 werden gemäß der Erfindung an ihren Fügekanten 82, 83 mittels eines ersten Laserkopfs 84 von ihrer Oberseite sowie eines zweiten Laserkopfs 85 von ihrer Unterseite bearbeitet. Die Laserköpfe laufen dabei entlang der mit Pfeilen 86, 87, 88 sowie 89 beschriebenen Bahn einander nachfolgend die Kontur der Fügekanten 82, 83 ab, sodass der Ablationsschritt erfolgt, ohne dass die Laserköpfe zu einem Bearbeitungszeitpunkt einander gegenüberstehen.

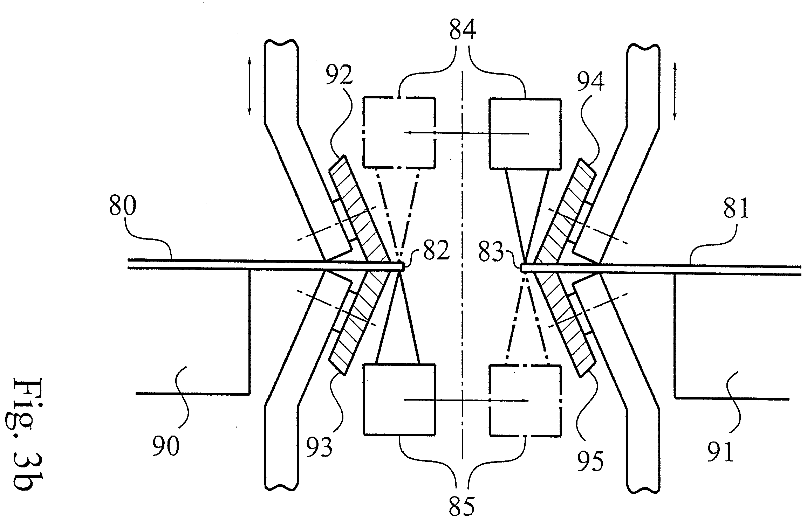

Figur 3b zeigt eine schematische Darstellung in Längsrichtung der Laserköpfe 84 sowie 85, wobei der Laserkopf 84 am Ende der Bahn 86 bereit zum Wechsel entlang der Bahn 87 steht und der Laserkopf 85 den Wechsel entlang der Bahn 89 vornimmt. Die Werkstücke 80, 81 werden durch Spannmagnete 90, 91 gehalten, wobei zur verbesserten Präzision der Bearbeitung an der Fügekante 82, 83 mit den Laserköpfen 84, 85 mitgeführte Rollenpaare 92, 93 sowie 94, 95 bewegt werden, um die Fügekanten 82, 83 exakt in ihrer Bearbeitungsposition in vertikaler Ausrichtung zu halten.

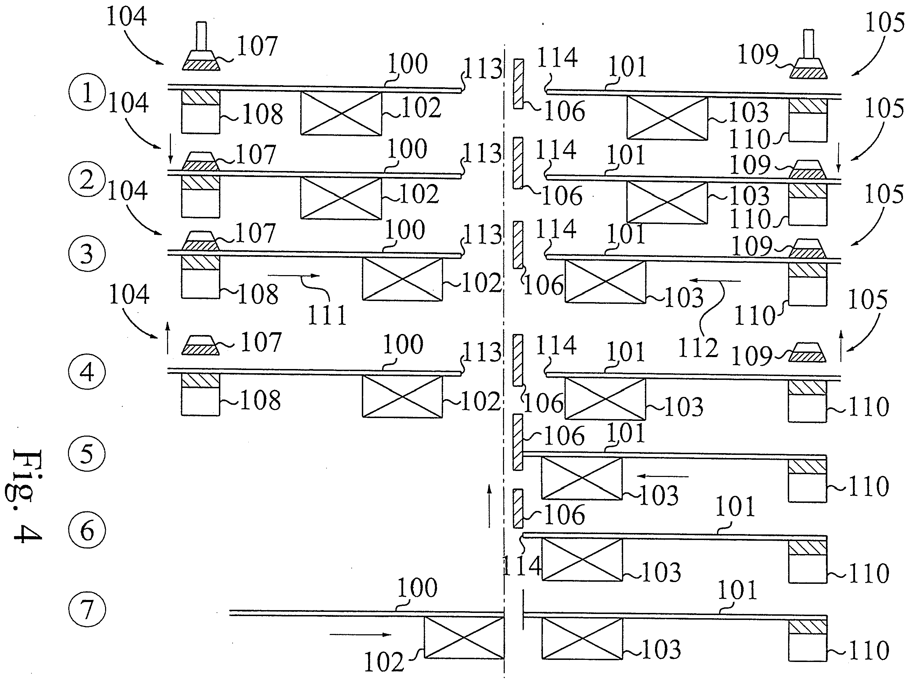

Figur 4 zeigt den Ablauf in sieben Schritten der Versetzung des ersten Spannmittels.

Die Werkstücke 100 sowie 101 werden in die Station IV eingefahren und sind zu diesem Zeitpunkt mit den ersten Spannmitteln 102 sowie 103 in Form von Spannmagneten gehalten. Die zweiten Spannmittel 104 sowie 105 sind zu diesem Zeitpunkt geöffnet und üben keine Spannkraft auf die Werkstücke 100, 101 aus. Nach Einbringung in die Station IV wird ein Anschlag 106 eingebracht. In einem zweiten Schritt des Ablaufs in der Station IV werden die zweiten Spannmittel 104, 105 durch Schließen einer oberen Spannbacke 107 gegen einen unteren Spannbock 108 im Bereich des ersten Werkstücks 100 sowie Schließen einer oberen Spannbacke 109 gegen einen unteren Spannbock 110 im Bereich des Werkstücks 101 geschlossen. Sodann werden die ersten Spannmittel 102 sowie 103 gelöst und entlang einer Bewegungsrichtung 111 sowie 112 auf den Anschlag 106 zubewegt. Dies kann über die bereits vorab beschriebenen Antriebe zum Anschwimmen einer Position erfolgen. Die zweiten Spannmittel 104 sowie 105 halten dabei die Werkstücke 100 sowie 101 in Position.

Nach Abschluss der Bewegung der ersten Spannmittel 102 sowie 103 im Schritt Nr.4 werden die zweiten Spannmittel 104, 105 gelöst, nachdem die ersten Spannmittel 102, 103 die Werkstücke 100, 101 wieder gesichert gespannt haben, indem das Magnetfeld der Spannmagnete aktiviert wurde. Im Schritt Nr.5 erfolgt sodann ein erstes Anfahren des Werkstücks 101 über Bewegung des Spannmittels 103 mit gespanntem Werkstück 101 an den Anschlag 106 zur Ausrichtung in einer Fügeposition für einen anschließenden Schweißschritt. Im Schritt Nr.6 wird der Anschlag 106 sodann entfernt, wonach im Schritt Nr.7 über Bewegung des ersten Spannmittels 102 mit darauf fixiertem Werkstück 100 dieses Werkstück 100 mit seiner Fügekante 113 auf Anschlag an die Fügekante 114 des zweiten Werkstücks 101 angefahren wird. Sodann werden die Positionen der ersten Spannmittel 102 sowie 103 in bekannter Weise verriegelt und die Spanneinheit in die Laser-Bearbeitungsstation V eingebracht, damit die Werkstücke 100, 101 miteinander verschweißt werden können.

Nach erfolgtem Verschweißen wird das resultierende, bearbeitete Werkstück in die Position VI zur Entladung, beispielsweise durch einen Entladeroboter überführt, wonach die Spanneinheit zur erneuten Beladung und ersten Ausrichtung in die Position I weitergedreht werden kann.

Das erste und das zweite Spannmittel können auch anders als in den Ausführungsbeispielen beschrieben ausgebildet sein. Insbesondere kann das zweite Spannmittel aus einer stationären Anordnung von Spannbacken in der Station IV. und einem mitbewegten Spannbock, beispielsweise in Form der Auflage 45, 58 bestehen.

### BEZUGSZEICHENLISTE

- 1: Anlage
- 2: Drehtisch
- 3: Spanneinheit
- 10: Lineartraverse
- 11: Lineartraverse
- 12: Lineartraverse
- 13: Laser-Ablationsvorrichtung
- 14: Bearbeitungskopf
- 15: Klemmhalter
- 16: Laserschweißkopf
- 20: Spanneinheit
- 21: Spannmittel
- 22: Spannmittel
- 23: Rahmen
- 24: Rahmen
- 25 - 28: Gewindespindel
- 29: Antriebseinheit
- 30: Antriebseinheit
- 32: Positionierpin
- 33: Richtung
- 40 - 43: Sperrvorrichtung
- 45: Auflagemittel
- 49: Spanneinheit
- 50: Werkstück
- 51: Werkstück
- 52: Spannmagnet
- 53: Spannmagnet
- 54: Antrieb
- 55: Antrieb
- 60: Drehtisch
- 61: Fügekante
- 62: Fügekante
- 80: Werkstück
- 81: Werkstück
- 82: Fügekante
- 83: Fügekante
- 84: Laserkopf
- 85: Laserkopf
- 86 - 89: Bahn
- 90: Spannmagnet
- 91: Spannmagnet
- 92 - 95: Rollenpaar
- 100: Werkstück
- 101: Werkstück
- 102: Spannmittel
- 103: Spannmittel
- 104: Spannmittel
- 105: Spannmittel
- 106: Anschlag
- 107: obere Spannbacke
- 108: unterer Spannbock
- 109: obere Spannbacke
- 110: unterer Spannbock
- 111: Bewegungsrichtung
- 112: Bewegungsrichtung
- 113: Fügekante
- 114: Fügekante

## Patentansprüche

1. Automatische Laser-Ablations- und Schweißanlage (1) zum Fügen von mindestens zwei Werkstücken (50, 51, 80, 81), insbesondere zwei Blechen, wobei die Ablations- und Schweißanlage (1) mindestens eine Spanneinheit (3), eine erste Positionierstation, eine Ablationsstation (II, 13), eine zweite Positionierstation und eine Schweißstation (V) umfasst, wobei die mindestens zwei Werkstücke (50, 51, 80, 81) in einer einzigen Spanneinheit (3) ablatiert, gefügt und verschweißt werden, **dadurch gekennzeichnet, dass** die Ablationsstation (II, 13) einen ersten Laserkopf (84) und einen zweiten Laserkopf (85) aufweist, die so angeordnet sind, dass die zwei in Ablationsposition ausgerichteten Werkstücke (80, 81) an ihren Fügekanten (82, 83) mittels des ersten Laserkopfs (84) von ihrer Oberseite sowie des zweiten Laserkopfs (85) von ihrer Unterseite bearbeitbar sind und die Laserköpfe (84, 85) dabei entlang einer Bahn einander nachfolgend die Kontur der Fügekanten (82, 83) ablaufen, sodass der Ablationsschritt erfolgt, ohne dass die Laserköpfe (84, 85) zu einem Bearbeitungszeitpunkt einander gegenüberstehen.

2. Ablations- und Schweißanlage nach Anspruch 1, **dadurch gekennzeichnet, dass** ein Drehtisch(2) mit einer Mehrzahl von Spanneinheiten (3, 20, 49) umfasst ist, wobei die Spanneinheiten (3, 20, 49) über den Drehtisch (2) von Position zu Position bewegbar sind.

3. Ablations- und Schweißanlage nach Anspruch 1 oder 2, **dadurch gekennzeichnet, dass** die Spanneinheit (3, 20, 49) mindestens einen Spannmagneten (52, 53, 90, 91) pro Werkstück (50, 51, 80, 81) umfasst.

4. Ablations- und Schweißanlage nach Anspruch 3, **dadurch gekennzeichnet, dass** mindestens ein Spannmagnet (52, 53, 90, 91) pro Werkstück (50, 51, 80, 81) in der Spanneinheit (3, 20, 49) schwimmend angeordnet bewegbar ist und über Fixiermittel, insbesondere Klemmvorrichtungen in einer angeschwommenen Position fixierbar ist.

## Claims

1. Automatic laser ablation and welding installation (1) for joining at least two workpieces (50, 51, 80, 81), in particular two metal sheets, wherein the ablation and welding installation (1) comprises at least one clamping unit (3), a first positioning station, an ablation station (II, 13), a second positioning station and a welding station (V), wherein the at least two workpieces (50, 51, 80, 81) are ablated, joined and welded in a single clamping unit (3), **characterized in that** the ablation station (II, 13) has a first laser head (84) and a second laser head (85) which are arranged such that the two workpieces (80, 81) oriented in an ablation position can be machined at their joining edges (82, 83) from their top side by means of the first laser head (84) and from their bottom side by means of the second laser head (85), and here, the laser heads (84, 85) run along the contour of the joining edges (82, 83) so as to follow one another along a path, such that the ablation step is performed without the laser heads (84, 85) being situated opposite one another at a machining time.

2. Ablation and welding installation according to Claim 1, **characterized in that** a rotary table (2) with a multiplicity of clamping units (3, 20, 49) is included, wherein the clamping units (3, 20, 49) are movable from position to position by means of the rotary table (2).

3. Ablation and welding installation according to Claim 1 or 2, **characterized in that** the clamping unit (3, 20, 49) comprises at least one clamping magnet (52, 53, 90, 91) per workpiece (50, 51, 80, 81).

4. Ablation and welding installation according to Claim 3, **characterized in that** at least one clamping magnet (52, 53, 90, 91) per workpiece (50, 51, 80, 81) is movable so as to be arranged in floating fashion in the clamping unit (3, 20, 49) and can be fixed by fixing means, in particular clamping devices, in a position that has been arrived at by floating movement.

## Revendications

1. Installation d'ablation et de soudage automatique au laser (1) pour l'assemblage d'au moins deux pièces (50, 51, 80, 81), en particulier deux feuilles, dans laquelle l'installation d'ablation et de soudage (1) comprend au moins une unité de serrage (3), une première station de positionnement, une station d'ablation (II, 13), une seconde station de positionnement et une station de soudage (V), dans laquelle lesdites au moins deux pièces (50, 51, 80, 81) sont soumises à une ablation, assemblées et soudées dans une unité de serrage unique (3),
**caractérisée en ce que** la station d'ablation (II, 13) comprend une première tête laser (84) et une seconde tête laser (85) qui sont disposées de telle sorte que les deux pièces (80, 81) orientées en position d'ablation puissent être traitées sur leurs arêtes de jonction (82, 83) au moyen de la première tête laser (84) depuis leur face supérieure et de la seconde tête laser (85) depuis leur face inférieure, les têtes laser (84, 85) se suivant ainsi le long d'un trajet qui suit le contour des arêtes de jonction (82, 83), de sorte que l'étape d'ablation s'effectue sans que les têtes laser (84, 85) ne soient en regard l'une de l'autre à un instant du traitement.

2. Installation d'ablation et de soudage selon la revendication 1, **caractérisée en ce qu'**elle comprend un plateau tournant (2) comportant une pluralité d'unités de serrage (3, 20, 49), dans laquelle les unités de serrage (3, 20, 49) peuvent être déplacées d'une position à l'autre par l'intermédiaire du plateau tournant (2).

3. Installation d'ablation et de soudage selon la revendication 1 ou 2, **caractérisée en ce que** l'unité de serrage (3, 20, 49) comprend au moins un aimant de serrage (52, 53, 90, 91) par pièce (50, 51, 80, 81).

4. Installation d'ablation et de soudage selon la revendication 3, **caractérisée en ce qu'**au moins un aimant de serrage (52, 53, 90, 91) par pièce (50, 51, 80, 81) peut être déplacé en étant disposé de manière flottante dans l'unité de serrage (3, 20, 49) et peut être fixé par des moyens de fixation, notamment des dispositifs de serrage, dans une position flottante.
